# EUROPÄISCHE PATENTSCHRIFT

(11) **EP 2 317 145 B1**
(45) Veröffentlichungstag und Bekanntmachung des Hinweises auf die Patenterteilung: **04.05.2016**
(21) Anmeldenummer: 10013619.1
(22) Anmeldetag: 14.10.2010
(51) Int. Cl.: F16D 31/04, F04C 2/16, F04C 15/00

(54) **Kupplung für eine Schraubenspindelpumpe**
Coupling for a screw spindle pump
Accouplement pour une pompe à vis

(30) Priorität: 29.10.2009 DE 202009014604 U
(43) Veröffentlichungstag der Anmeldung: 04.05.2011
(73) Patentinhaber: Jung & Co. Gerätebau GmbH, 25495 Kummerfeld/Pinneberg (DE)
(72) Erfinder: Jung, Hans, 25421 Pinneberg (DE)
(74) Vertreter: Hausfeld, Norbert

(56) Entgegenhaltungen:
- DE-A1-102007 025 953
- DE-C- 715 860
- DE-T2- 60 003 093
- DE-T2- 60 030 057

## Beschreibung

Die Erfindung betrifft eine Mehrschraubensplndelpumpe der im Oberbegriff des Anspruches 1 genannten Art.

Derartige Pumpen sind z.B. aus der DE 102 57 859 B4, Fig. 2 oder der DE 715 860 bekannt, und dienen der Förderung verschiedenster Förderprodukte. Die Förderung erfolgt dabei über zwei oder mehr ineinander greifende Förderschrauben, deren Wellen durch Zahntriebe miteinander verbunden sind. In der Regel wird bei diesen Pumpen eine Welle, nachfolgend Abtriebswelle genannt, von einem externen Motor drehangetrieben und überträgt seine Drehbewegung Innerhalb des Pumpengehäuses über die Zahntriebe auf die anderen Wellen. Ohne Elnschränkung der Allgemeinheit soll nachfolgend nur noch von zwei Wellen und also einer Doppelschraubenspindelpumpe die Rede sein.

Bei einigen Pumpenkonstruktionen ragt aus dem Pumpengehäuse ein Wellenstutzen der Abtriebswelle heraus, an den die Antriebswelle des Antriebsmotors gekuppelt wird. Dies kann z.B. in koaxialer Anordnung zwischen Antriebswelle und Wellenstutren der Pumpe erfolgen und mit einer starren Kupplung. Da aber eine genaue Ausrichtung zwischen Pumpe und Antriebsmotor bei einer solchen Konstruktion nicht einfach Ist, wird häufig eine elastische Kupplung zwischen die zu verbindenden Wellen gesetzt, z.B. eine im Stand der Technik bekannte Elastomerkupplung bzw. drehelastische Klauenkupplung.

In alternativer Konstruktion dazu gibt es gattungsgemäße Pumpen, die antriebsseitig einen Flansch aufweisen, um daran den Antriebsmotor zur Verblockung anzuflanschen. Innerhalb der Flanschverbindung erfolgt auch die Kupplung zwischen Motorantriebswelle und Pumpenabtriebswelle. Die Kupplung erfolgt dabei Immer starr, da Motor und Pumpe bei dieser verblockten Anordnung sehr exakt zueinander ausgerichtet werden können. Aber auch bei diesen gattungsgemäße Pumpen führen Justierfehler und Fertigungstoleranzen zu Schwingungen und unruhlgem Laufen, die die Langlebigkeit der Pumpe beeinträchtigen. Auch hier können die Kupplungen elastische Komponenten aufweisen, siehe unter anderem DE 600 03 093 T2, die allerdings relativ großbauend sind und einen separaten Kupplungsbereich erfordern.

Es ist die Aufgabe der vorliegenden Erfindung hier Abhilfe zu schaffen.

Diese Aufgabe wird gelöst mit den Merkmalen des Anspruchs 1. Vorteilhafte Ausgestaltungen sind in den Unteransprüchen angegeben.

Eine der Wellen, nämlich die vom externen Motor angetriebene Abtriebswelle, weist antriebsseitig ein Kupplungsstück für die Ankupplung an den externen Antriebsmotor auf. Dieses Kupplungsstück reicht in seiner axialen Erstreckung bis in den Bereich des Flansches hinein und ist für die starre Ankupplung der Antriebswelle des Motors mit der Abtriebswelle der Pumpe geeignet ausgebildet und angeordnet. Das bedeutet zum einen, dass das Kupplungsstück zugänglich ist für das Ankuppeln der Antriebswelle, zum anderen, dass das Kupplungsstück geeignet ausgeformt ist für das Ankuppeln der Antriebswelle, z.B. durch das Vorsehen einer geeignet geformten Nut, in die eine an der Antriebswelle ausgeformte Feder eingreifen kann. Welle und Kupplungsstück können aber auch anders aneinander gekuppelt werden, z.B. durch Schrauben.

Erfindungsgemäß sind nun förderseitlg dieses Kupplungsstückes zwischen Abtriebswelle und Kupplungsstück drehschwingungsdämpfende Mittel angeordnet. Diese drehschwlngungsdämpfenden Mittel sorgen dafür, dass die Kraftübertragung von der Antriebswelle auf die Abtriebswelle gegen Stöße und unruhiges Laufen gedämpft erfolgt. Beispielsweise kann eine zumindest bereichsweise biegeelastische Welle als drehschwingungsdämpfendes Mittel verwendet werden.

Vorteilhaft sind die drehschwingungsdämpfenden Mittel aber eine elastische Kupplung, wie sie z.B. aus dem Stand der Technik bekannt sind. Konstruktiv besonders einfach erfolgt die Ausbildung der elastischen Kupplung dadurch, dass das Kupplungsteil für die starre Motorankupplung gleichzeitig förderseitig als Kupplungsteil für die elastische Kupplung ausgebildet ist. Dieses Kupplungsstück ist gewissermaßen gleichzeitig Bestandteil von zwei Kupplungen, nämlich auf seiner Antriebsseite starrer Kupplungskörper, also Bestandteil einer starren Kupplung, und auf seiner Förderseite elastischer Kupplungskörper, also Bestandteil einer elastischen Kupplung. Diese Umschreibung als elastischer bzw. starrer Kopplungskörper ist dabei nicht auf das Material des Körpers bezogen, sondern auf dessen Funktion. Die Elastizität der Kupplung ergibt sich aus den Merkmalen des Anspruchs 1.

Mit Vorteil sind die Merkmale des Anspruchs 3 vorgesehen. Es ist dadurch möglich, den Zahnkranz auf der zweiten Welle auszutauschen, ohne die Kupplung oder die Abtriebswelle ausbauen zu müssen, well die erforderliche Bewegungsfrelhelt in axialer Richtung gewährleistet ist.

Nachfolgend soll die Erfindung anhand eines Ausführungsbeispieles weiter erläutert werden. Es zeigen:
- Fig. 1: eine Schnittansicht durch das antriebsseitige Ende einer erfindungsgemäßen Schraubenspindelpumpe, und
- Fig. 2: eine Explosionsdarstellung des antriebsseitigen Endes der Abtriebswelle mit Kupplungselementen der Schraubenspindelpumpe gemäß der Konstruktion der Fig. 1.

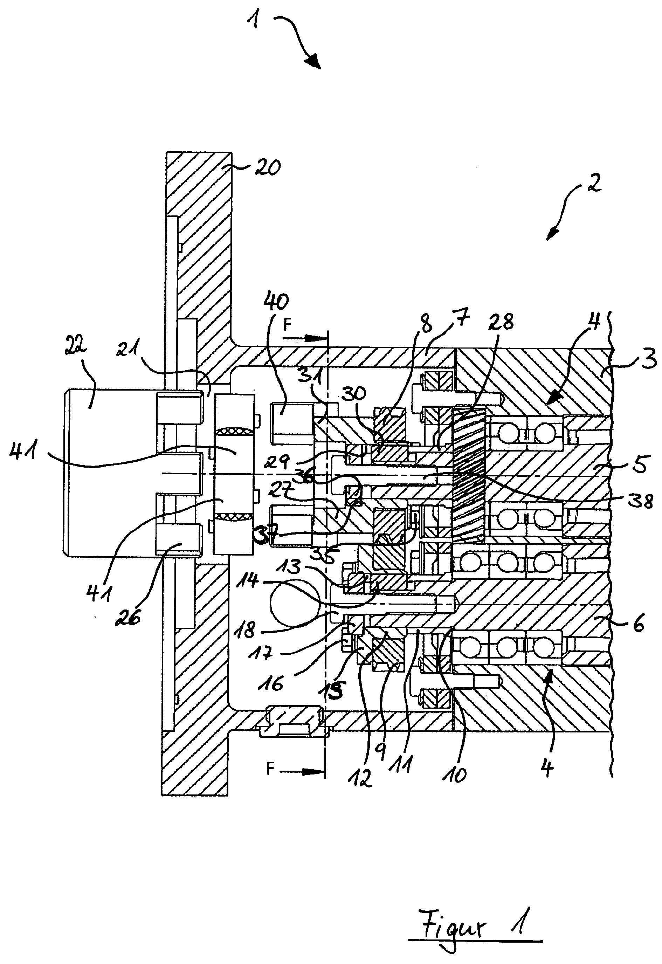

Figur 1 zeigt das antriebseitige Ende einer Schraubenspindelpumpe 1, deren Gehäuse 2 aus mehreren Teilen besteht. Nicht mehr dargestellt ist der Förderbereich der Pumpe 1 mit den beiden Förderschnecken, weil dieser Bereich für die vorliegende Erfindung nicht bedeutend ist. Dieser Bereich kann daher beliebig und wie im Stand der Technik bekannt ausgebildet sein, z.B. wie in der DE 102 57 859, der DE 715 860, der US 1,762,708 oder der DE 102009040643 dargestellt.

Antriebsseitig schließt sich dem Förderbereich das Lagergehäuse 3 mit den Lagern 4 für die Wellen 5, 6 der Förderschnecken an. Der Förderbereich und dieser der Wellenlagerung dienende Bereich sind durch Dichtungen voneinander getrennt. Auch hier können die konstruktiven Details vernachlässigt werden, weil Sie für die Erfindung nicht bedeutsam sind.

Dem Lagergehäuse 3 schließt sich das Getriebegehäuse 7 an, das die Pumpe 1 antriebsseitig abschließt. Innerhalb dieses Getriebegehäuses 7 erfolgt die Drehkopplung der beiden Wellen 5, 6 durch auf beiden Wellen 5, 6 angebrachte und miteinander kämmende Zahnräder 8, 9. Die obere der beiden in der Schnittzeichnung zu erkennenden Wellen 5 dient der Ankupplung an einen externen Motor, während die untere Welle 6 im Getriebegehäuse 7 endet.

Die untere Welle 7 kann wie im Stand der Technik üblich ausgebildet sein, also z.B. wie in Figur 1 dargestellt zum Ende hin abgesetzt. Darauf sitzt in Anschlag bis an den Absatz 10 eine Abstandsbuchse 11, an die der ebenfalls auf der Welle 6 sitzende Zahnradträger 12 anstößt. Der Zahnradträger 12 weist eine innere Nut 13 auf, in die eine auf der Welle 6 angebrachte Passfeder 14 eingreift. Zu seinem freien Ende hin ist der Zahnradträger 12, auf dem das Zahnrad 9 sitzt, mit einem verbreiterten Flansch 15 ausgestattet, der in Achsrichtung der Welle 6 mit Bohrungen versehen ist, die fluchtend zu Gewindelöchern im Zahnrad 9 stehen. Mittels durch die Bohrungen bis zu den Gewindelöchern verlaufender Schrauben 16 wird das Zahnrad 9 auf dem Zahnradträger 12 verschraubt. Die Befestigung des Zahnradträgers 12 auf der Welle 6 erfolgt über eine Spannscheibe 17, die auf den Zahnradträger 12 gelegt wird, und die von einer axial in die Welle 6 eingeschraubten Sechskantschraube 18 fest auf die Welle 6 gespannt wird.

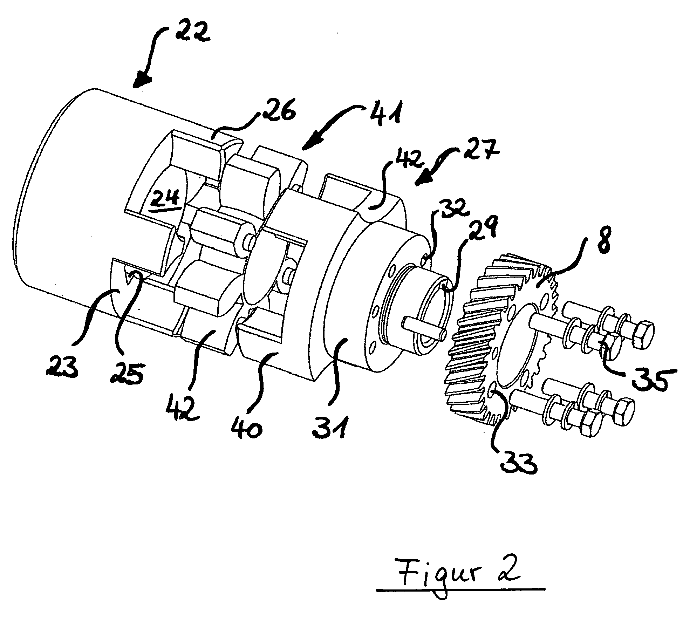

Das Getriebegehäuse 7 ist antriebsseitig als Verblockungsflansch 20 für den verblockten Anschluss des Motorgehäuses ausgebildet. Zur besseren Übersicht, und weil die vorliegende Erfindung nicht den Motor betrifft, ist dieser nicht dargestellt. In axialer Verlängerung der Abtriebswelle 5 der Pumpe 1 weist der Verblockungsflansch 20 eine kreisförmige Öffnung 21 auf, in der das Kupplungsendstück 22 der Abtriebswelle 5 der Pumpe 1 mündet. Die weitere Beschreibung erfolgt zusätzlich unter Bezugnahme auf die Figur 2, in der die räumlichen Verhältnisse besser erkennbar sind. Das Kupplungsendstück 22 ist als Hülse 23 ausgebildet mit einem freien Durchmesser 24 im Inneren, in das das Kupplungsende der Antriebswelle des Motors einsteckbar ist. Für die Drehkopplung weist die Hülse 23 eine innere, sich radial nach außen erstreckende und in Axialrichtung verlaufende Nut 25 auf, in die eine komplementär auf der Motorantriebswelle ausgebildete Feder (nicht dargestellt) formschlüssig eingreifen kann. Auf der motorabgewandten Seite ist die Hülse 23 mit mehreren umfangsverteilten Kupplungsklauen 26 versehen.

Der Zahnradträger 27 der oberen Welle 5 ist gegenüber dem oben beschriebenen Zahnradträger 12 der unteren Welle 6 stark modifiziert. Wie die untere Welle 6 ist auch die obere Welle 5 zum Ende hin abgesetzt (siehe Figur 1). Darauf sitzt erneut in Anschlag bis an den Absatz eine Abstandsbuchse 28, an die der ebenfalls auf der Welle 5 sitzende Zahnradträger 27 anstößt. Der Zahnradträger 27 weist wieder eine innere Nut 29 auf, in die eine auf der Welle 5 angebrachte Passfeder 30 eingreift. Zu seinem freien Ende hin ist der Zahnradträger 27, auf dem das Zahnrad 8 sitzt, mit einem verbreiterten Flansch 31 ausgestattet, der in Achsrichtung der Welle 5 mit Gewindelöchern 32 versehen ist, die fluchtend zu Bohrungen 33 im Zahnrad 8 stehen. Mittels von hinten durch die Bohrungen 33 des Zahnrades 8 bis zu den Gewindelöchern 32 des Zahnradträgers 27 verlaufender Schrauben 35 wird das Zahnrad 8 auf dem Zahnradträger 27 verschraubt. Die Verschraubung erfolgt also in entgegen gesetzter Richtung wie bei der unteren Welle 6. Die Befestigung des Zahnradträgers 27 hingegen erfolgt erneut über eine Spannscheibe 36, die auf einen inneren Absatz 37 des Zahnradträgers 27 gelegt wird, und die von einer axial in die Welle 5 eingeschraubten Sechskantschraube 38 fest auf die Welle 5 gespannt wird.

Der Zahnradträger 27 der oberen Welle 5 ist antriebsseitig mit umfangsverteilten Kupplungsklauen 40 ausgebildet, die zu den Klauen 26 der oben beschriebenen Hülse 23 korrespondieren. Der Zahnradträger 27 ist also zugleich auch Kupplungsteil. Zwischen die beiden Kupplungsteile 22, 27 wird ein Elastomerstern 41 angeordnet, dessen Arme 42 sich zwischen die benachbarten Klauen 26, 40 der beiden Kupplungsteile 22, 27 legen.

Der Zahnradträger 27 ist in seinem die Kupplungsklauen 40 aufweisenden Bereich von einem größeren Durchmesser als das auf ihm befestigte Zahnrad 8. In diesem Bereich vergrößerten Durchmessers sind zylindrische konkav geformte Einbuchtungen 42 vorgesehen, um axiale Bewegungsfreiheit für das Zahnrad 9 der ersten Welle 6 zu ermöglichen. Die Einbuchtungen 42 sind also z.B. komplementär zur geglätteten Querschnittskontur des ersten Zahnrades 9 ausgebildet.

## Patentansprüche

1. Schraubenspindelpumpe (1) mit einem Pumpengehäuse (2, 3, 7) und mit mehreren Förderschrauben, die innerhalb des Pumpengehäuses (2) in dessen Förderbereich angeordnet sind, wobei die Förderschrauben Wellen (5, 6) aufweisen, die sich in axialer Richtung bis zum antriebsseitigen Ende der Pumpe (1) bis in einen Getriebebereich (7) erstrecken, in dem die Wellen (5, 6) Zahnräder (8, 9) aufweisen, mittels derer die Wellen (5, 6) drehgekoppelt sind, wobei eine der Wellen (5) antriebsseitig ein Kupplungsstück (22) für die Ankupplung an einen externen Antriebsmotor aufweist, wobei weiterhin das Pumpengehäuse (2, 3, 7) antriebsseitig für die Verblockung mit dem Antriebsmotor mit einem Flansch (20) ausgebildet ist, und das Kupplungsstück (22) der Abtriebswelle (5) der Pumpe (1) sich in axialer Richtung bis in den Bereich dieses Flansches (20) erstreckt und für die starre Ankupplung der Antriebswelle des Motors mit der Abtriebswelle (5) der Pumpe (1) geeignet ausgebildet und angeordnet ist, **dadurch gekennzeichnet, dass** förderseitig dieses Kupplungsstückes (22) zwischen Welle (5) und Kupplungsstück (22) drehschwingungsdämpfende Mittel (26, 40, 41) angeordnet sind, dass die drehschwingungsdämpfenden Mittel eine elastische Kupplung (22, 26; 27, 40; 41) sind, dass das Kupplungsstück (22) für die starre Motorankupplung förderseitig als Kupplungsteil (26) für die elastische Kupplung ausgebildet ist, dass das Zahnrad (8) der Abtriebswelle (5) auf einem auf der Abtriebswelle (5) befestigten Zahnradträger (27) angeordnet Ist, und dass der Zahnradträger (27) antriebsseitig als Kupplungsteil (40) für die elastische Kupplung ausgebildet ist.

2. Schraubenspindelpumpe (1) nach Anspruch 1, **dadurch gekennzeichnet, dass** die elastische Kupplung als Klauenkupplung (22, 26; 27, 40) mit dazwischenliegendem Elastomerstern (41)ausgebildet ist.

3. Schraubenspindelpumpe (1) nach Anspruch 1 oder 2, **dadurch gekennzeichnet, dass** der Zahnradträger (27) In einem Teilbereich seiner axialen Erstreckung einen größeren Radius als das auf ihm angeordnete Zahnrad (8) aufweist, wobei er in diesem Bereich zylindrische konkav geformte Einbuchtungen (42) aufweist, die zur Ermöglichung einer axialen Bewegungsfreiheit der zweiten Welle (6) mit Zahnrad (9) komplementär dazu ausgebildet sind.

## Claims

1. Screw spindle pump (1) having a pump housing (2, 3, 7) and having a plurality of conveying screws which are arranged within the pump housing (2) in the conveying region of the latter, the conveying screws having shafts (5, 6) which extend in the axial direction as far as the drive-side end of the pump (1) as far as into a gear region (7), in which the shafts (5, 6) have gearwheels (8, 9), by means of which the shafts (5, 6) are rotationally coupled, one of the shafts (5) having a coupling piece (22) on the drive side for coupling to an external drive motor, the pump housing (2, 3, 7), furthermore, being configured with a flange (20) on the drive side for interlocking with the drive motor, and the coupling piece (22) of the output shaft (5) of the pump (1) extending in the axial direction as far as into the region of the said flange (20) and being arranged and configured such that it is suitable for the rigid coupling of the drive shaft of the motor to the output shaft (5) of the pump (1), **characterized in that** means (26, 40, 41) which damp torsional vibrations are arranged on the conveying side of the said coupling piece (22) between the shaft (5) and the coupling piece (22), **in that** the means which damp torsional vibrations are an elastic coupling (22, 26; 27, 40; 41), **in that** the coupling piece (22) is configured on the conveying side as a coupling part (26) for the elastic coupling for the rigid motor coupling, **in that** the gearwheel (8) of the output shaft (5) is arranged on a gearwheel carrier (27) which is fastened on the output shaft (5), and **in that** the gearwheel carrier (27) is configured on the drive side as a coupling part (40) for the elastic coupling.

2. Screw spindle pump (1) according to Claim 1, **characterized in that** the elastic coupling is configured as a claw coupling (22, 26; 27, 40) with an elastomer star (41) which lies in between.

3. Screw spindle pump (1) according to Claim 1 or 2, **characterized in that** the gearwheel carrier (27) has a greater radius in a part region of its axial extent than the gearwheel (8) which is arranged on it, the said gearwheel carrier (27) having, in the said region, cylindrical concavely shaped indentations (42) which, in order to make an axial freedom of movement of the second shaft (6) with gearwheel (9) possible, are of complementary configuration with respect to the latter.

## Revendications

1. Pompe à vis (1) comprenant un boîtier de pompe (2, 3, 7) et plusieurs vis sans fin, qui sont disposées à l'intérieur du boîtier de pompe (2) dans sa région de refoulement, les vis sans fin présentant des arbres (5, 6) qui s'étendent dans la direction axiale jusqu'à l'extrémité de la pompe (1) du côté de l'entraînement jusque dans une région de transmission (7) dans laquelle les arbres (5, 6) présentent des roues dentées (8, 9) au moyen desquelles les arbres (5, 6) sont accouplés en rotation, l'un des arbres (5) présentant, du côté de l'entraînement, une pièce d'accouplement (22) pour l'accouplement à un moteur d'entraînement externe, le boîtier de pompe (2, 3, 7) étant en outre réalisé du côté de l'entraînement de manière à s'emboîter avec le moteur d'entraînement par le biais d'une bride (20), et la pièce d'accouplement (22) de l'arbre de prise de force (5) de la pompe (1) s'étendant dans la direction axiale jusque dans la région de cette bride (20) et étant réalisée et disposée de manière appropriée pour l'accouplement rigide de l'arbre d'entraînement du moteur à l'arbre de prise de force (5) de la pompe (1), **caractérisée en ce que** des moyens amortissant les oscillations de rotation (26, 40, 41) sont disposés du côté du refoulement de cette pièce d'accouplement (22) entre l'arbre (5) et la pièce d'accouplement (22), **en ce que** les moyens amortissant les oscillations de rotation sont un accouplement élastique (22, 26 ; 27, 40 ; 41), **en ce que** la pièce d'accouplement (22) pour l'accouplement rigide du moteur est réalisée du côté du refoulement sous forme de pièce d'accouplement (26) pour l'accouplement élastique, **en ce que** la roue dentée (8) de l'arbre de prise de force (5) est disposée sur un support de roue dentée (27) fixé sur l'arbre de prise de force (5), et **en ce que** le support de roue dentée (27) est réalisé du côté de l'entraînement en tant que pièce d'accouplement (40) pour l'accouplement élastique.

2. Pompe à vis (1) selon la revendication 1, **caractérisée en ce que** l'accouplement élastique est réalisé sous forme d'accouplement à griffes (22, 26 ; 27, 40) avec une étoile élastomère interposée (41).

3. Pompe à vis (1) selon la revendication 1 ou 2, **caractérisée en ce que** le support de roue dentée (27) présente, dans une région partielle de son étendue axiale, un plus grand rayon que la roue dentée (8) disposée sur lui, et présente, dans cette région, des renfoncements (42) de forme cylindrique concave qui sont réalisés de manière complémentaire avec la roue dentée (9) afin de permettre une liberté de mouvement du deuxième arbre (6) avec la roue dentée (9).
